# EUROPÄISCHE PATENTANMELDUNG

(11) **EP 1 992 899 A2**
(43) Veröffentlichungstag der Anmeldung: **19.11.2008**
(21) Anmeldenummer: 08156370.2
(22) Anmeldetag: 16.05.2008
(51) Int. Cl.: F28D 20/02, F28F 21/02, H05B 3/22, F24H 3/00

(54) **Wärmestrahler-Heizgerät**

(30) Priorität: 16.05.2007 DE 102007023314
(71) Anmelder: SGL Carbon AG, 65203 Wiesbaden (DE)
(72) Erfinder: Guckert, Werner, 86674 Baar (DE); Heuer, Dirk, 86150 Augsburg (DE); Fieback, Klaus, 14467 Potsdam (DE)

(57) **Zusammenfassung**

Die Erfindung betrifft ein Wärmestrahler-Heizgerät bestehend aus einer Wärmestrahlung abgebenden Heizquelle und einer Wärmestrahlung ausrichtenden Einrichtung in Form eines Wärmestrahlung abgebenden Schirmes, wobei der genannte Schirm und/oder ein in der resultierenden Hauptstrahlungsrichtung vor der Heizquelle angeordnetes flächenförmiges Element aus einer Phasenübergangsmaterial enthaltenden Graphitfolie, -platte oder einem Hohlkörper mit Phasenübergangsmaterial besteht.

## Beschreibung

Die Erfindung betrifft ein Wärmestrahler-Heizgerät bestehend aus einer Wärmestrahlung abgebenden Heizquelle und einer Wärmestrahlung ausrichtenden Einrichtung in Form eines Wärmestrahlung abgebenden Schirmes zum Beispiel in Form einer Platte oder eines geformten Bauteils.

Wärme-Heizgeräte bestehen vorzugsweise aus Infrarotstrahlern, die als Schmal- und Breitstrahler ausgeführt sind, aus Heißluftgeräten die mittels Gasbrennern oder elektrisch betrieben werden und nicht zuletzt aus flüssigkeitsdurchströmten Heizkörpern und -rohren.

Den derzeit auf dem Markt befindlichen Strahlern ist gemein, dass die Wärmestrahlung oder auch die Heißluft nicht gleichmäßig über eine größere Breite mit einer inhomogene Strahlungsverteilung abgestrahlt wird, und dass die Heizgeräte nach dem Abschalten nur bedingt über Wärmespeichermöglichkeiten verfügen.

Eine Möglichkeit das o. g. Problem zu lösen, besteht in dem Vorschalten von entsprechenden Diffusoren, z. B. durch Vorschalten von Metallflächen oder von Phasenwechselmaterialien (phase change materials) enthaltenden Platten, wie es im Dokument EP 0791 163 beschrieben ist.

Beide Maßnahmen stellen aber eine nicht zufriedenstellende Möglichkeit dar. So können Metallflächen die physikalisch bedingte Ungleichverteilung der Strahlung nicht aufheben und reine PCM-Platten dämpfen den Wärmeenergieaustrag. PCM-Platten können zwar den Energieeintrag durch die Temperaturtransformation (latente Wärme) vergleichsmäßigen, aber aufgrund ihrer schlechten Wärmeleitung die Ungleichverteilung der Wärmequelle nicht ausgleichen.

Gelöst wird dieses Problem gemäß der nachstehenden Erfindung dadurch, dass ein sehr gut wärmeleitende Körper aus expandiertem Graphit verwendet wird, der mit einem dem gewünschten Temperaturniveau entsprechenden PCM versehen wird.
Das Wärmestrahler-Heizgerät besteht somit aus einer die Wärmestrahlung abgebenden Heizquelle und einer die Wärmestrahlung ausrichtenden Einrichtung (Vorrichtung) in Form eines Wärmestrahlung abgebenden Schirmes, wobei der genannte Schirm und/oder ein in der resultierenden Hauptstrahlungsrichtung vor der Heizquelle angeordnetes flächenförmiges oder gebogenes Element bzw. Hohlkörper aus einer Phasenübergangsmaterial enthaltenden Graphitfolie, -platte oder einem aus expandiertem Graphit hergestellten Hohlkörper mit Phasenübergangsmaterial besteht.

Vorzugsweise besteht die Strahlplatte des Wärmestrahler-Heizgerät aus einer Graphitfolie, -platte oder -hohlkörper aus expandiertem Graphit. Die Strahlplatte des Wärmestrahler-Heizgerät in Form eines Hohlkörpers kann auch aus Metall, Kunststoff oder Keramik bestehen, der mit einem Graphit-PCM-Gemisch gefüllt ist. Die Graphitfolie oder -platte oder der Graphithohlkörper enthalten einen Zusatz von 10 bis 90 Masseprozent eines PCM. Das PCM ist dabei ausgewählt aus der Gruppe der Paraffine, Salzhydrate oder deren Mischungen. Weiterhin kann das PCM aus einem Polymer mit einem Verdicker, vorzugsweise einem Di- oder Triblockpolymer oder anderen Verdickern für das Kristallwasser ausgerüstet sein.

Vorteilhafterweise wird das erfindungsgemäße Wärmestrahler-Heizgerät für die Beheizung von Kunststoff-Umformeinrichtungen eingesetzt und das Phasenübergangsmaterial zeigt einen Phasenübergang im Temperaturbereich von 15 °C bis 150 °C. Weiterhin kann das Wärmestrahler-Heizgerät zur Temperierung von gewerblich genutzten Gebäuden oder für Strahlungsbeheizungen, zum Warmhalten von Industrieprozessen oder zur gleichmäßigen Verteilung der Temperierung von Produkten in Industrieanlagen oder Supermärkten eingesetzt werden.

Stellvertretend für die o. g. große Breite von Anwendungen, wird die Erfindung in nachstehenden zwei Beispielen, die die Anwendungen im technischen Apparatebau der Kunststoffindustrie und zur Beheizung von Räumen wie Gewächshäuser betreffen, näher erläutert.

### Beispiel 1

Zum Erwärmen von Kunststoffkörpern ( Fasern, Folien, Platten, Bauteilen) werden vorzugsweise Strahler-Heizgeräte bzw. Heißluft-Geräte verwendet. Beide Gerätetypen eignen sich mehr oder weniger gut zum linienförmigen bis vollflächigen Erwärmen der o. g. Kunststoffkörper. Je nach Anforderung werden die Kunststoffkörper während bzw. nach der Erwärmung beispielsweise tiefgezogen, gebogen, kaschiert oder bedruckt.
Für jeden einzelnen Anwendungsfall ist somit das Zusammenspiel zwischen der Erwärmungseinrichtung, dem Kunststofftyp, der Materialdicke usw. abzustimmen. Dies gelingt mit den heute auf dem Markt befindlichen Anlagen mehr oder weniger zufriedenstellend. In der Regel werden für die o. g. Aufgabenstellungen Schmalstrahler- und Breitstrahler- Heizgeräte verwendet. Die Erwärmung erfolgt meist über Glühdrähte und Strahlerhauben mit vorzugsweise keramischen Heizelementen.
Nachteilig bei diesen Apparaten ist, wie beschrieben, die ungleichmäßige Temperaturverteilung über die jeweilige Arbeitsbreite und -länge.
Dies führt insbesondere beim Erwärmen dickwandiger Kunststoffteile zu inneren Spannungen in den Teilen, was sich im Verzug der Teile vor dem Verformen und in nicht maßhaltigen Abmessungen der Teile nach dem Umformen zeigt.
In diesen Anwendungsfällen führt das o. g. Wärmestrahler-Heizgerät zur Vereinheitlichung der Temperaturverteilung und damit verbunden zu schnelleren Aufheizraten durch die Möglichkeit, höhere Strahlerleistungen einsetzten zu können. Die gleichmäßigere Temperaturabstrahlung führt nicht zuletzt zu maßhaltigeren Teilen.

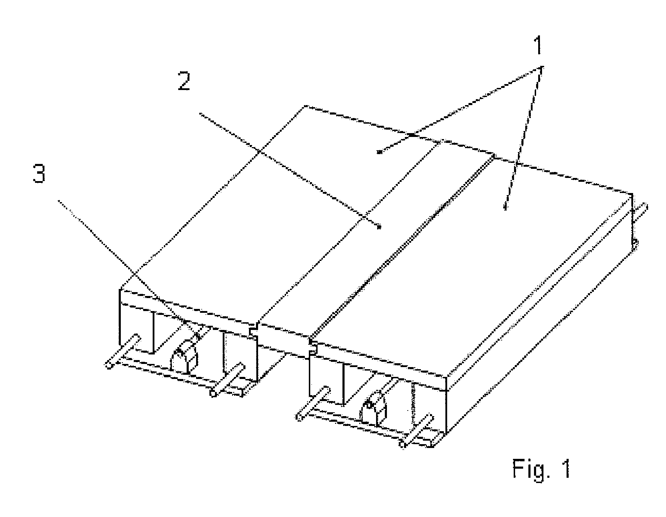

Abbildung 1 zeigt den grundsätzlichen Aufbau der Vorrichtung mit einer Wärme-Abstrahlvorrichtung bestehend aus einem Glühdraht, Strahlungsleuchte oder Heizstab 3 sowie mit den Strahlplatten 1 aus Graphitleichtbauplatten, die ganz oder partiell mit PCM gefüllt sind. Die Abstrahlplatten 1 vergleichmäßigen die eingebrachte Wärmeenergie der Heizstäbe 3. Die sind durch eine Verbindungsplatte 2 aus expandiertem Graphit verbunden. Damit lässt sich eine noch größere Abstrahlflächen durch das Verbinden mit den Strahlplatten 1 erzielen. Die Ausbildung der Verbindungsplatte 2 kann den besonderen Erfordernissen angepasst werden.

### Beispiel 2

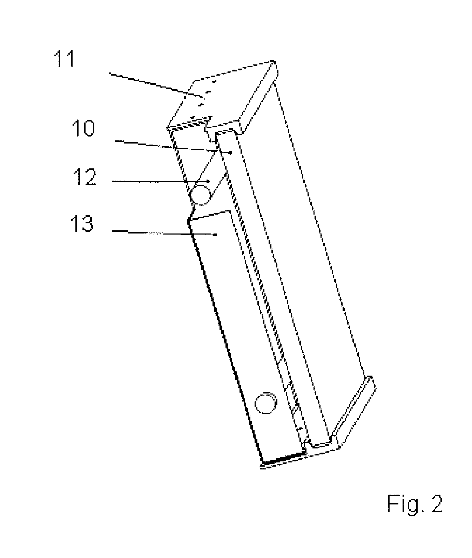

Abbildung 2 zeigt den schematischen Aufbau eines Wärmestrahlungsheizgerätes zum Beheizen von z. B. Gewächshäusern. Der Rahmen 13 dient zur Aufnahme der Strahlungsplatte 10 bestehend aus einer Graphitplatte. Die Strahlungsplatte 10 wird durch das Heizrohr 12, dass mit einer Wärmeträgerflüssigkeit durchströmt wird, erwärmt. Die eine Umhüllung bzw. die rückseitige Abdeckung des Wärmestrahler-Heizgerätes besteht aus einem metallischen Rahmen 13, der zugleich auch die Aufnahme und Fixierung der Heizrohre 12 übernimmt.

## Patentansprüche

**1.** Wärmestrahler-Heizgerät bestehend aus einer Wärmestrahlung abgebenden Heizquelle und einer Wärmestrahlung ausrichtenden Einrichtung in Form eines Wärmestrahlung abgebenden Schirmes, **dadurch gekennzeichnet, dass** der genannte Schirm und/oder ein in der resultierenden Hauptstrahlungsrichtung vor der Heizquelle angeordnetes flächenförmiges oder dreidimensionales Element aus einer Phasenübergangsmaterial enthaltenden Graphitfolie,

**2.** platte oder einem Hohlkörper mit Phasenübergangsmaterial besteht.

**3.** Wärmestrahler-Heizgerät nach Anspruch 1, **dadurch gekennzeichnet, dass** die Graphitfolie, -platte oder -Hohlkörper aus expandiertem Graphit besteht.

**4.** Wärmestrahler-Heizgerät nach Anspruch 1 und 2, **dadurch gekennzeichnet, dass** der Hohlkörper aus Metall, Kunststoff, Keramik, Glas, Leichtbauelementen oder deren Kombination besteht, der mit einem Graphit-PCM-Gemisch gefüllt ist.

**5.** Wärmestrahler-Heizgerät nach Anspruch 1 bis 3, **dadurch gekennzeichnet, dass** die Graphitfolie oder -platte oder der Graphithohlkörper einen Zusatz von 10 bis 90 Masseprozent eines PCM enthält.

**6.** Wärmestrahler-Heizgerät nach Anspruch 1 bis 4, **dadurch gekennzeichnet, dass** das PCM ausgewählt ist aus der Gruppe der Paraffine, Salzhydrate, Zuckerlösungen oder deren Mischungen.

**7.** Wärmestrahler-Heizgerät nach Anspruch 1 bis 5, **dadurch gekennzeichnet, dass** das PCM aus einem Polymer mit einem Verdicker für das Kristallwasser ausgerüstet ist.

**8.** Wärmestrahler-Heizgerät nach Anspruch 1 bis 6, **dadurch gekennzeichnet, dass** die Graphitfolie oder -platte eine Dicke von 0,15 mm bis 40 mm aufweist.

**9.** Wärmestrahler-Heizgerät nach Anspruch 1 bis 8, **dadurch gekennzeichnet, dass** es für die Beheizung von Wohnungen eingesetzt wird und das Phasenübergangs-material einen Phasenübergang im Temperaturbereich von 10 °C bis 80 °C zeigt.

**10.** Wärmestrahler-Heizgerät nach Anspruch 1 bis 9, **dadurch gekennzeichnet, dass** es für die Beheizung von Kunststoff-Umformeinrichtungen eingesetzt wird und das Phasenübergangsmaterial einen Phasenübergang im Temperaturbereich von 15 °C bis 150 °C zeigt.

**11.** Wärmestrahler-Heizgerät nach Anspruch 1 bis 10 **dadurch gekennzeichnet, dass** es zur Temperierung von gewerblich genutzten Gebäuden eingesetzt wird.

**12.** Wärmestrahler-Heizgerät nach Anspruch 1 bis 11 **dadurch gekennzeichnet, dass** es für Strahlungsbeheizungen, zum Warmhalten von Industrieprozessen oder zur gleichmäßigen Verteilung der Temperierung von Produkten eingesetzt wird.
